# EUROPEAN PATENT APPLICATION

(11) **EP 3 605 368 A2**
(43) Date of publication of application: **05.02.2020**
(21) Application number: 19189203.3
(22) Date of filing: 30.07.2019
(51) Int. Cl.: G06F 17/50

(54) **METHODS AND SYSTEMS FOR CREATING SURFACE COVERING LAYOUTS**

(30) Priority: 31.07.2018 GB 201812480
(71) Applicant: Altro Limited, Letchworth Garden City Hertfordshire SG6 1NW (GB)
(72) Inventor: PEACE, Richard John, Letchworth, Hertfordshire SG6 1NW (GB); DAULBY, Peter John, Letchworth, Hertfordshire SG6 1NW (GB); JALALI, Nimra, Letchworth, Hertfordshire SG6 1NW (GB)
(74) Representative: Peel, James Peter

(57) **Abstract**

The invention provides a method for the preparation of pattern data for a surface-covering for one or more spaces wherein the surface-covering pattern data defines pattern characteristics which include the number of pieces of surface-covering, the measurements of each piece, the shape of each piece, laying direction of each piece, laying angle of each piece, number of joints, position of each joint, and/or -machine-learnt pattern characteristics which method comprises the steps of:
a. Providing a surface plan for the one or more spaces wherein the surface plan defines shape characteristics of each of the spaces wherein shape characteristics comprise the dimensions and shape of each space and the location, type, shape, and/or dimensions of any feature or obstruction in each space;
b. Determining a hierarchy of pattern criteria for determining one or more pattern priorities for the surface-covering pattern wherein the pattern criteria include one or more aesthetic criteria, one or more machine-learnt criteria, and/or minimising the number of joints;
c. Generating pattern data for the one or more spaces wherein the pattern data defines pattern characteristics; and
d. Analysing the pattern data according to the pattern criteria hierarchy to identify pattern data which have the best fit with the pattern criteria;
a kit of pieces of surface covering defined by pattern data obtained from the method of the invention; and a software application operable to perform the method of the invention.

## Description

The present invention relates to a method for creating a layout for covering a floor of one or more rooms in a building with a surface-covering material with efficient use of materials, an aesthetic appearance, and while minimising the number of joints between different pieces of surface-covering material.

The creation of a surface-covering layout is an important step for a manufacturer of surface coverings. The appearance of a surface covering may be enhanced with an aesthetic layout, wastage and cost may be reduced with the efficient use of materials, health and safety compliance may be improved by placement of joints, and speed of laying may be increased by minimising the number of joints.

The floor plan creation process is as much an art as a science as a number of factors need to be balanced. How to balance the factors to devise a surface-covering layout is a matter of experience and is difficult to teach. On the other hand, floor covering manufacturers need to be able to respond to commercial demand in new markets and to be able to deliver suitable layouts for the installation of their products.

Computer software is available on smartphones which can generate building floor plan information which shows the dimensions of rooms and room features such as doors, cupboards, alcoves, columns, drains, gulleys, plumbing fixtures. Computer software is also available which will devise a basic layout for a surface material for a building floor plan. Furthermore, AI as a service is available from companies such as IBM, Amazon, and Google.

A way of ameliorating these problems has been sought.

According to the invention there is provided a method for the preparation of pattern data for a surface-covering for one or more spaces as defined in claim 1.

The advantages of the method according to the invention include:
- Growth in Export Markets: the applicant has a growing export market. One of the barriers to growth outside the UK is the lack of skilled installers familiar with products of the type provided by the applicant. This results in poor installations and barriers to customers in using the product. Representatives of the applicant frequently travel to these markets to assist with training, but the capacity for this is limited. The method of the invention has surprisingly been found to provide assistance to installers, thereby reducing one of the barriers to growth in these markets.
- Improved productivity and cost reduction: automating the method for producing surface-covering patterns has been found to improve productivity levels and enable efficiencies across the business, in for example shipping costs where less material needs to be transported and costs and time spent installing the surface-covering.

In some embodiments, the generating step (c) or analysing step (d) may comprise generating an array of pattern data for the one or more spaces. In some embodiments, the generation step (c) may comprise generating a set of pattern data for each space of the surface plan or an array of pattern data for the one or more spaces wherein each array of pattern data varies in one or more pattern characteristics. In some embodiments, the analysis step (d) may comprise a statistical analysis of the pattern data array.

In some embodiments, the pattern criteria may include increasing efficiency of usage of the surface-covering and the method may include a cutting plan generation step which comprises producing a cutting plan from the pattern data wherein the cutting plan defines how the surface-covering is to be cut to produce a surface-covering kit comprising a plurality of pieces of surface-covering suitable for covering the surface plan. In some embodiments, the cutting plan generation step comprises scoring a cutting plan on its usage efficiency, where a cutting plan having a high usage efficiency is seen as being desirable. In some embodiments, the usage efficiency may be calculated as a ratio of the surface area of the one or more spaces to be covered (referred to herein as area X) to the surface area of the surface-covering used to form the cutting plan (referred to herein as area Y), e.g. to create the surface-covering kit. It should be understood herein that instead of calculating usage efficiency, a waste proportion may be calculated from the ratio of the difference between the surface area of the surface-covering used to form the cutting plan and the surface-covering used to form the cutting plan to the surface-covering used to form the cutting plan (which could be calculated as (Y-X) to X).

In some embodiments, the cutting plan generation step may be performed after step (c) and step (d) may comprise analysing the pattern data and their associated cutting plan according to the pattern criteria.

In some embodiments, the cutting plan generation step may be performed after step (d) on the pattern data and the method may comprise a final step of analysing the cutting plans according to their usage efficiency.

In some embodiments, the pattern criteria may include minimising waste of the surface-covering, step (c) may comprise generating an array of surface-covering patterns where each pattern varies in one or more pattern characteristics, and the method may include an additional step (c1) after step (c) wherein step (c1) comprises producing a cutting plan for each surface-covering pattern in the array wherein the cutting plan defines how the surface-covering is to be cut to produce a surface-covering kit comprising a plurality of pieces of surface-covering suitable for covering the surface plan.

Advantages of providing a surface-covering in the form of a kit include improved safety for customers and onsite recycling. Typically, a surface-covering is provided in rolls, which have an area of about 40m² and a weight of more than 120 kg. Increasingly customers are providing feedback that manual handling of these rolls is unsafe. By providing the surface-covering in the form of a kit, the weight of each item would be reduced, allaying these concerns. Reduction of the product weight in other ways is difficult without compromising durability of the product. The applicant is committed to continuous improvement in sustainability and is one of the founder members of Recofloor - a scheme for returning and recycling PVC floor covering for recycling. To our knowledge, the applicant is one of the few companies capable of recycling safety floor surface-coverings, having overcome the issues with the presence of abrasive materials including aluminium oxide and silicon carbide. Some of the biggest barriers to increasing recycling rates include the separation of waste, return for recycling, and correct identification of material. Pre-cutting of the surface-covering to produce a kit means that the waste, which is estimated to be 10% of all flooring material produced, remains on-site at the applicant for recycling and eliminates these issues.

In some embodiments, the method may comprise generating an array of pattern data which defines pattern data for each of the one or more spaces. In some embodiments, the generating step (c) or analysing step (d) may comprise generating an array of pattern data for the one or more spaces. In some embodiments, generating step (c) comprises generating sets of pattern data which each comprise all possible pattern characteristics for a single space, analysing step (d) comprises identifying pattern data which satisfies the pattern criteria and generating one or more arrays of pattern data.

In some embodiments, the one or more machine learnt criteria and/or machine-learnt pattern characteristics includes one or more criteria and/or characteristic which are learnt through analysis of one or more training sets of data relating to layouts, arrays of surface-covering patterns, and selected surface-covering patterns in order to identify an additional criteria or characteristic which is common to selected surface-covering patterns.

In some embodiments, step (c) may use one or more input pattern parameters to generate one or more output pattern parameters for each space wherein the pattern data comprises the input pattern parameters and the output pattern parameters. In some embodiments, the one or more input pattern parameters may comprise the laying direction of each piece of surface covering, the laying angle of each piece of surface covering, and optionally one or more machine-learnt input pattern parameters. In some embodiments, the one or more output pattern parameters may include the number of pieces of surface-covering, the measurements of each piece, the shape of each piece, number of joints, the position of each joint, and optionally one or more machine-learnt output pattern parameters.

In some embodiments, the surface plan may include a space count, the shape of each space, the principle dimensions of each space, a space feature count, and/or a space feature type wherein a space feature includes one or more of an obstruction which requires a joint in the surface-covering in order to accommodate it, a central feature, and/or a perimeter feature. In some embodiments, the space feature type may define dimensions of each space feature.

In some embodiments, the surface plan may define one or more of the spaces in which self-coving is required, which boundaries of a space require a self-coving surface covering, and/or the height of the self-coving wherein a coving is to be provided by a self-coving surface-covering where part of the surface-covering covers a lower part of a wall for ease of cleaning and hygiene. In some embodiments, the pattern characteristics may include a coving characteristic to identify which edges of a piece of surface-covering are shaped for providing coving.

In some embodiments, the surface plan may include subfloor information for each space which may include subfloor moisture content, subfloor substrate type, and/or subfloor heating type. In some embodiments, the pattern characteristics may define a surface-covering type or surface-covering adhesive to suit the subfloor.

In some embodiments, the one or more spaces may include two (e.g. three, e.g. four, e.g. five, e.g. six) or more moderate simple spaces wherein at least one principle dimension is less than the predefined width of the surface-covering and wherein one principle dimension is greater than the predefined width of the surface-covering and which has no obstruction. In some embodiments, the one or more spaces may include two (e.g. three, e.g. four, e.g. five, e.g. six) or more small complex spaces wherein both principle dimensions are less than the predefined width of the surface-covering and which has one or more obstructions. In some embodiments, the one or more spaces may include two (e.g. three, e.g. four, e.g. five, e.g. six) or more moderate complex spaces wherein at least one principle dimension is less than the predefined width of the surface-covering and wherein one principle dimension is greater than the predefined width of the surface-covering and which has one or more obstructions. In some embodiments, the one or more spaces may include two (e.g. three, e.g. four, e.g. five, e.g. six) or more small simple space wherein both principle dimensions are less than the predefined width of the surface-covering and which has no obstruction. When the one or more spaces include additional moderate simple spaces, and/or additional small complex spaces, and/or additional moderate complex spaces, and/or additional small simple spaces, the complexity of the surface plan is increased.

In some embodiments, the surface-covering may have a predefined width and the method may include a surface plan analysis step (a1) to be performed after step (a) wherein the surface plan analysis step comprises classifying each of the one or more spaces as being:
a. A small simple space wherein both principle dimensions are less than the predefined width of the surface-covering and which has no obstruction;
b. A moderate simple space wherein at least one principle dimension is greater than the predefined width of the surface-covering and which has no obstruction;
c. A small complex space wherein both principle dimensions are less than the predefined width of the surface-covering and which has one or more obstructions; or
d. A moderate complex space wherein at least one principle dimension is greater than the predefined width of the surface-covering and which has one or more obstructions;
where an obstruction is a central feature which requires a joint in the surface-covering for the surface-covering to be arranged around it. In some embodiments, a moderate simple space may be defined as:
(i) a medium simple space wherein one principle dimension is greater than the predefined width of the surface-covering and which has no obstruction; or
(ii) a large simple space wherein both principle dimensions are greater than the predefined width of the surface-covering and which has no obstruction; and wherein a moderate complex space may be defined as:
(iii) a medium complex space wherein one principle dimension is greater than the predefined width of the surface-covering and which has one or more obstructions; or
(iv) a large complex space wherein both principle dimensions are greater than the predefined width of the surface-covering and which has one or more obstructions.

In some embodiments, the method according to the invention uses a surface-covering which has a predefined width and wherein the method includes a surface plan analysis step a1 to be performed after step (a) wherein the surface plan analysis step comprises classifying each of the one or more spaces as being:
(a) A small simple space wherein both principle dimensions are less than the predefined width of the surface-covering and which has no obstruction;
(b) A medium simple space wherein one principle dimension is greater than the predefined width of the surface-covering and which has no obstruction;
(c) A large simple space wherein both principle dimensions are greater than the predefined width of the surface-covering and which has no obstruction;
(d) A small complex space wherein both principle dimensions are less than the predefined width of the surface-covering and which has one or more obstructions;
(e) A medium complex space wherein one principle dimension is greater than the predefined width of the surface-covering and which has one or more obstructions; or
(f) A large complex space wherein both principle dimensions are greater than the principle dimensions of the surface-covering and which has one or more middle obstructions;
where an obstruction is a substantial central feature which requires a joint in the surface-covering for the surface-covering to be arranged around it.

In some embodiments, the generation step (c) comprises generating pattern data which include the laying direction for the surface-covering, the shape of the piece of surface-covering, the dimensions of the piece of surface-covering, the starting point for the piece of surface covering, and optionally a machine-learnt characteristic for a small simple space, and generating pattern characteristics which are the number of pieces of surface-covering, the shape of each piece, laying direction of each piece, the number of joints, the position of each joint, and optionally a machine-learnt pattern characteristic for the other spaces. The other spaces are spaces which need more than one piece of surface-covering to cover them and so need more pattern data to characterise them. The other spaces include a medium simple space, large simple space, a small complex space, a medium complex space, and a large complex space. In some embodiments, the generation step (c) includes determining the total number of pieces of surface-covering to cover the one or more spaces.

In some embodiments, the one or more aesthetic criteria includes criteria such as orientation of a joint in relation to the line of sight of a user of a space, consistent positioning of joints in relation to middle obstructions of a similar type, proximity of a joint to a doorway, and/or orientation of the surface-covering where the surface-covering has a directional pattern. The line of sight of a user of a space may be the natural line of sight of a person entering or moving through the space or it may be the natural line of sight of a habitual user of the space from the position in the space which they would habitually occupy. Examples of surface-coverings which have a directional pattern include surface-coverings having striped patterns such as in the form of wooden planks.

In some embodiments, the surface-covering may be a continuous surface-covering supplied in a roll having a pre-determined width. Examples of the surface-covering include a floor covering such as a plastics (e.g. acrylate or PVC) floor covering or carpet. In some embodiments, a floor covering may be a safety floor covering having a non-slip surface, for example a floor covering comprising an at least partially exposed particulate material.

In some embodiments, the surface plan may include the number of spaces and for each space, the shape of each space, the principle dimensions of each space, whether a space includes a space feature, and the space feature type (if present). In some embodiments, a space feature may include an obstruction which requires a joint in the surface-covering in order to accommodate it, a central feature, and/or a perimeter feature. In some embodiments, the space feature type may define the type of each space feature and optionally its dimensions.

In some embodiments, the surface plan may identify the spaces in which coving is required. In some embodiments, the surface plan may identify which boundaries of a space require coving and the height of the coving. In some embodiments, the pattern characteristics may include a coving characteristic to identify which edges of a piece of surface-covering are shaped for providing coving. In some embodiments, a surface-covering may be a self-coving surface-covering where part of the surface-covering covers a lower part of a wall for ease of cleaning and hygiene.

In some embodiments, the surface plan may include subfloor information for each space which may include subfloor moisture content, subfloor substrate type, and/or subfloor heating type. In some embodiments, the pattern characteristics may define a surface-covering type or surface-covering adhesive to suit the subfloor.

In some embodiments, a small simple space may be an alcove, cupboard, or a small room. An off-cut of surface-covering material could be used in a small simple space.

In some embodiments, an obstruction may be a structural feature such as column, a railing, a window, a stair well, and/or one or more steps such as a staircase.

In some embodiments, a perimeter feature for the surface plan may be a feature which projects into a space from its boundary or perimeter wall. In some embodiments, a perimeter feature may be a wall, fixed furniture such as a cupboard, and/or a plumbing fixture. In some embodiments, the generation of the pattern data in step (c) may define the shape of a surface-covering piece to accommodate such a side obstruction in such a space.

According to the invention there is also provided a software application operable to perform a method according to the invention.

The invention will now be illustrated with reference to the following Figures of the accompanying drawings which are not intended to limit the scope of the claimed invention:
**FIGURE 1** shows a surface plan comprising a small complex space and a small simple space for use in the invention;
**FIGURE 2** shows a flowchart illustrating the steps of a first embodiment of the method of the invention which generates and scores sets of pattern data, analyses the sets of pattern data to generate low scoring arrays of pattern data, generates and scores cutting plans for each low scoring array, and analyses each cutting plan for efficiency;
**FIGURE 3** shows a flowchart illustrating the steps of a second embodiment of the method of the invention which generates and scores arrays of pattern data, generates and scores cutting plans for each array, and analyses the pattern data and cutting plan for each array;
**FIGURE 4** shows a flowchart illustrating the steps of a first embodiment of the pattern data generation process used in the method of the invention to generate sets of pattern data for each space;
**FIGURE 5** shows a flowchart illustrating the steps of a second embodiment of the pattern data generation process used in the method of the invention to generate arrays of pattern data;
**FIGURE 6** shows a flowchart illustrating the steps of a third embodiment of the pattern data generation process used in the method of the invention to generate arrays of pattern data;
**FIGURE 7A** shows a first array of surface-covering patterns for the surface plan shown in Figure 1 for a first laying direction;
**FIGURE 7B** shows a second array of surface-covering patterns for the surface plan shown in Figure 1 for a second laying direction;
**FIGURE 7C** shows a third array of surface-covering patterns for the surface plan shown in Figure 1 for a second laying direction;
**FIGURE 8A** shows a set of surface-covering patterns for space 40 of the surface plan shown in Figure 1; and
**FIGURE 8B** shows a set of surface-covering patterns for space 50 of the surface plan shown in Figure 1.

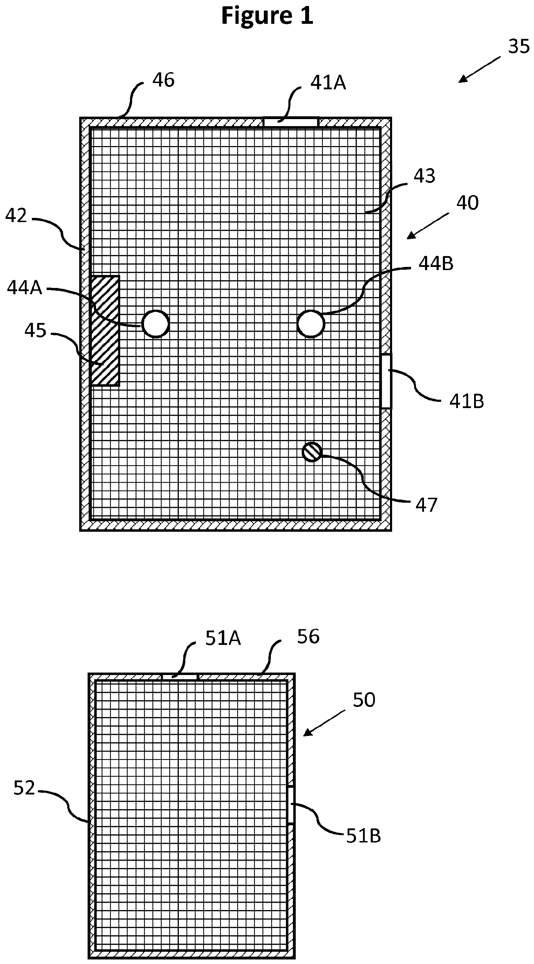

A surface plan for use in the method of the invention is indicated generally at 35 on Figure 1. Surface plan 35 defines the shape characteristics for a small complex space indicated at 40 and a small simple space indicated generally at 50 to be covered by a surface-covering manufactured in the form of a roll having a pre-determined width.

Small complex space 40 is defined by shape characteristics which include its rectangular plan shape having a floor space 43 and its principle dimensions which are defined by an opposed pair of parallel long perimeter walls 42 and an opposed pair of parallel short perimeter walls 46 which define edges of the small complex space 40. Small complex space 40 is referred to as being small because both of its principle dimensions are less than the pre-determined width of the surface-covering roll. The shape characteristics for the small complex space 40 include perimeter features which are a first doorway 41A which is formed in one short wall 46, a second doorway 41B which is formed in one long wall 42, and a cupboard 45 arranged on the opposite long wall 42 to the second doorway 41B. The space characteristics for the small complex space 40 also include a central feature 47 in the form of a drain as well as obstructions which are two columns 44A,44B having a circular cross-section. The gulley and drain 47 are central features as they are spaced from the perimeter walls 42,44 but they are not obstructions as they do not require a joint in the surface-covering in order to accommodate them. The two columns 44A,44B are obstructions as they are spaced from the perimeter walls 42,44 and require a joint in the surface-covering in order to accommodate them. It is not possible to have a single continuous piece of surface-covering to cover the whole of the floorspace 43 because the columns 44A,44B connect the floorspace 43 to the ceiling (not shown) of the small complex space 40. Small complex space 40 is referred as being complex because of the presence of obstructions 44A,44B.

In an alternative embodiment, the small complex space 40 may be a medium complex space if one of its principle dimensions is greater than the pre-determined width of the roll of surface-covering or a large complex space if both of its principle dimensions are greater than the pre-determined width of the roll of surface-covering.

Small simple space 50 is defined by shape characteristics which include its rectangular plan shape and its principle dimensions which are defined by an opposed pair of parallel long perimeter walls 52 and an opposed pair of parallel short perimeter walls 56 which define edges of the small simple space 50. The shape characteristics for the small simple space 50 also include perimeter features which are first doorway 51A is formed in one short wall 56 and a second doorway 51B is formed in one long wall 52. Small simple space 50 is referred to as being small as both of its principle dimensions are less than the pre-determined width of the roll of surface-covering. Small simple space 50 is referred to as being simple as it lacks an obstruction which is a feature which requires a joint in the surface-covering in order to accommodate it.

In an alternative embodiment, the small simple space 50 may be may be a medium simple space if one of its principle dimensions is greater than the pre-determined width of the roll of surface-covering or a large simple space if both of its principle dimensions are greater than the pre-determined width of the roll of surface-covering. In an alternative embodiment, small complex space 40 and small simple space 50 may be adjoining, such as by sharing doorways 41A,41B,51A,51B.

The invention provides two methods 10,110 for devising arrays of pattern data which define pattern characteristics for surface-coverings suitable for laying on one or more spaces 40,50 such that their surfaces are covered. Pattern characteristics may include the number of pieces of surface-covering required to cover each space, the measurements of each piece, the shape of each piece, laying direction of each piece, laying angle of each piece, number of joints, position of each joint, and/or one or more machine-learnt pattern characteristics.

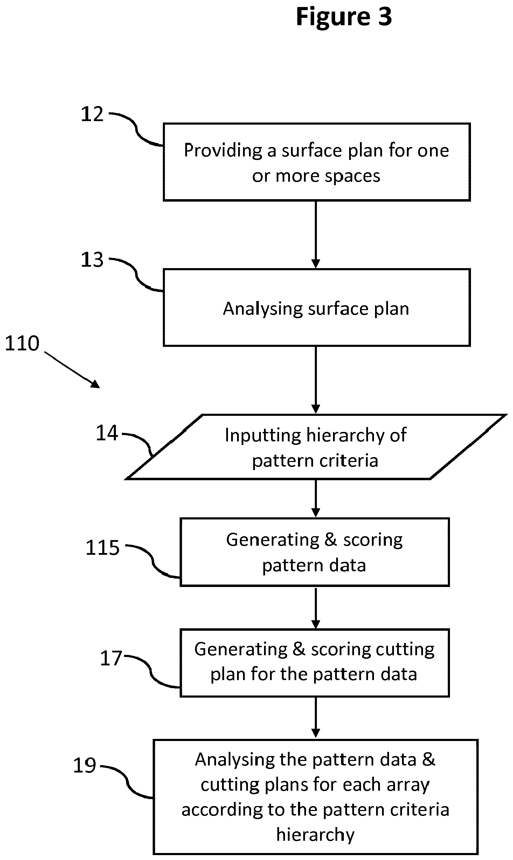

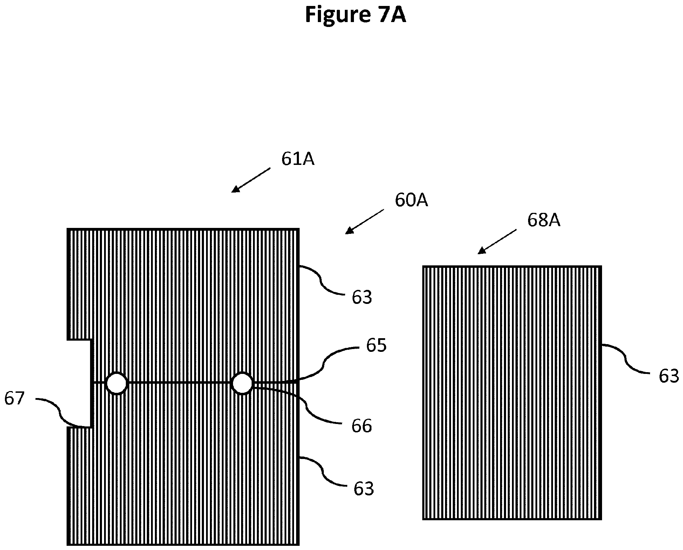

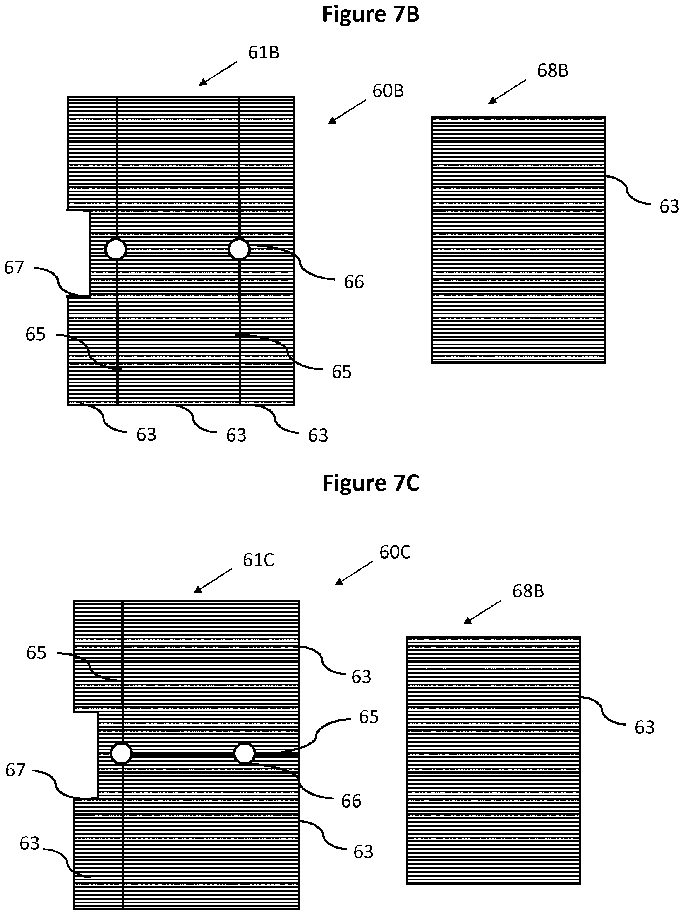

A flowchart illustrating the steps of the method according to a second embodiment of the invention is indicated generally at 110 on Figure 3. In the method according to a second embodiment of the invention 110, arrays of pattern data 60A,60B,60C as shown in Table 1 and illustrated in Figures 7A,7B,7C are generated which represent all possible combinations of pattern data for the one or more spaces 40,50 to be covered by a surface-covering. A pattern data array 60A,60B,60C comprises pattern data for each space 40,50.

**TABLE 1**

| | | **Small complex space 40** | **Small simple space 50** |
|---|---|---|---|
| **Array** | **Array 60A** | Pattern data 61A | Pattern data 68A |
| | **Array (not shown)** | Pattern data 61B | Pattern data 68A |
| | **Array (not shown)** | Pattern data 61C | Pattern data 68A |
| | **Array (not shown)** | Pattern data 61A | Pattern data 68B |
| | **Array 60B** | Pattern data 61B | Pattern data 68B |
| | **Array 60C** | Pattern data 61C | Pattern data 68B |

A cutting plan is generated for each array and then the cutting plan and pattern data for each array is scored according to a predefined hierarchy of pattern criteria to identify an efficient pattern data array 60A,60B,60C which satisfies the pattern criteria and which generates a minimal amount of waste floor covering.

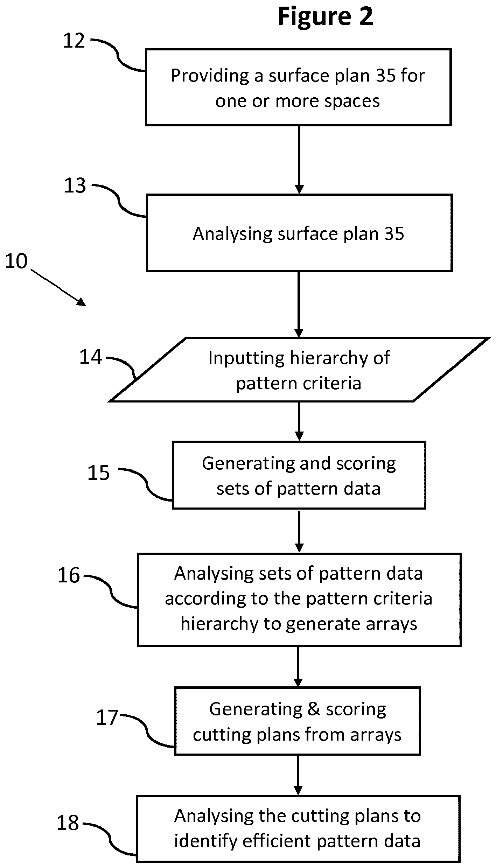

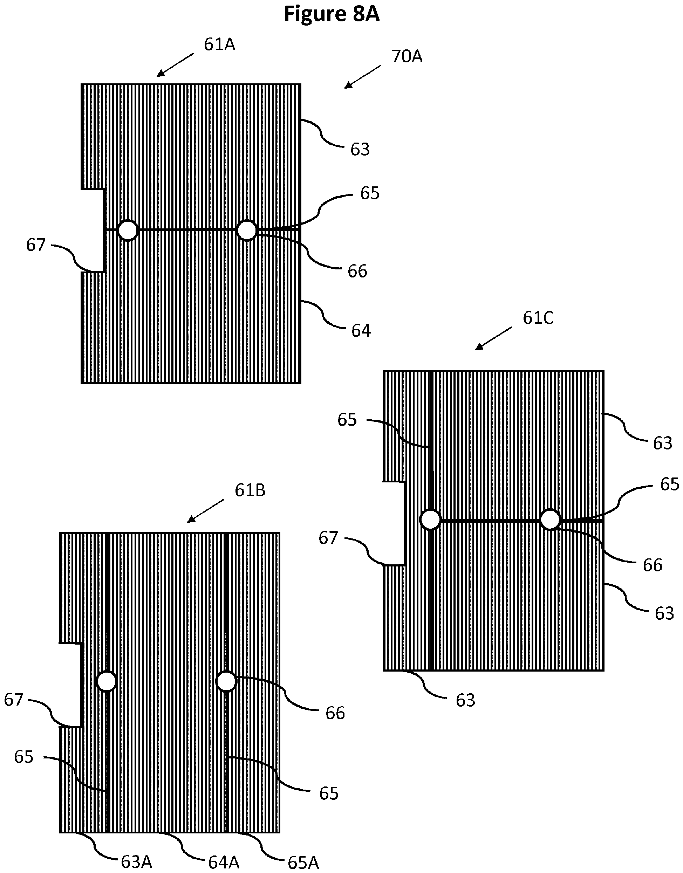

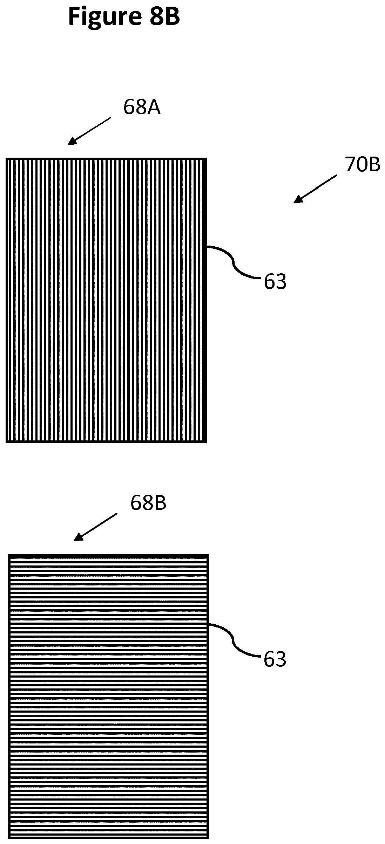

A flowchart illustrating the steps of the method according to a first embodiment of the invention is indicated generally at 10 on Figure 2. In the method according to a first embodiment of the invention 10, all possible pattern data is generated for each space 40,50 in turn to generate sets of pattern data 70A,70B shown in Table 2 and illustrated in Figures 8A,8B are prepared first.

**TABLE 2**

| **Sets** | |
|---|---|
| **Set 70A for Small complex space 40** | **Set 70B for Small simple space 50** |
| Pattern data 61A | Pattern data 68A |
| Pattern data 61B | Pattern data 68B |
| Pattern data 61C | |

Sets 70A,70B each respectively comprise pattern data 61A,61B,61C and 68A,68B which each represent all the possible pattern data for spaces 40,50 respectively. The sets 70A,70B are then analysed according to a predefined hierarchy of pattern criteria to identify suitable pattern data for each space 40,50 such that one or more arrays of pattern data 60A,60B,60C can then be generated. The arrays of pattern data 60A,60B,60C are then used to generate cutting plans which are analysed according to their efficiency of use of the roll of surface-covering so as to identify an array of pattern data which has minimal waste and which satisfies the pattern criteria.

Flowchart 10 comprises the sequential steps of providing 12 a surface plan 35 for one or more spaces 40,50, analysing 13 the surface plan 35 at least to identify simple and complex spaces, inputting 14 a hierarchy of pattern criteria for determining one or more pattern priorities, generating and scoring 15 sets of pattern data for each space 40,50 of the surface plan 35, analysing 16 the pattern data according to the pattern criteria hierarchy to identify low scoring pattern data such that one or more arrays of low scoring pattern data may be generated, generating and scoring 17 cutting plans for the one or more arrays of low scoring pattern data, analysing 18 the cutting plans to identify a low scoring and efficient pattern data for the surface plan 35.

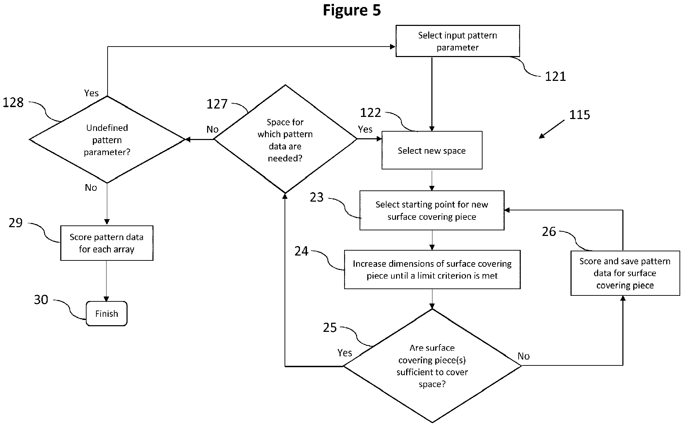

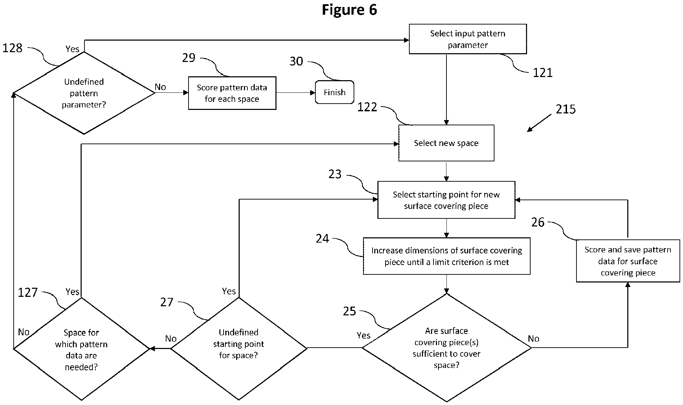

A flowchart illustrating the steps of the method according to a second embodiment of the invention is indicated generally at 110 on Figure 3. Flowchart 110 comprises the sequential steps of providing 12 a surface plan 35 for one or more spaces 40,50, analysing 13 the surface plan 35 (e.g. to identify simple and complex spaces), inputting 14 a hierarchy of pattern criteria for determining one or more pattern priorities, generating and scoring 115 pattern data arrays 60A,60B,60C for the spaces 40,50 in the surface plan 35, generating and scoring 17 cutting plans for the pattern data arrays 60A,60B,60C (e.g. for the low scoring pattern data arrays 60A,60B,60C), analysing 20 the pattern data and cutting plans according to the hierarchy of pattern criteria for identifying an efficient and low scoring surface-covering layout for the surface plan 35. In an alternative embodiment, the generating and scoring step 115 as illustrated by the process of Figure 5 may be replaced by generating and scoring step 215 as illustrated by the process of Figure 6.

A surface plan 35 may be provided in step 12 using software such as RoomScan. The surface plan 35 defines a space count (which defines the number of spaces), shape characteristics of each of the spaces wherein shape characteristics comprise the dimensions, evenness, and shape of each space, a space feature count (which defines the number of space features), and the location, type, shape, and/or dimensions of any space feature. A space feature may include an obstruction in each space. The evenness of a space is important as an uneven space may need more of the surface-covering to cover it. A space feature may be a perimeter feature arranged on a perimeter of a space 40,50 such as a doorway 41 or a cupboard 45, a central feature such as a gulley, drain hole, floor box, oven which is within a space 40,50 such that it is spaced from its walls, or an obstruction which is spaced from the walls of the space 40,50 and has a shape such that it is not possible to arrange the surface-covering around the obstruction without using two more pieces of surface-covering.

Analysis step 13 comprises analysing the surface plan 35 in order to characterise a space by a machine-learnt characteristic and/or as being a small, medium or large space or as a simple or complex space, as follows:
(a) A small simple space wherein both principle dimensions are less than the predefined width of the surface-covering and which has no obstruction;
(b) A medium simple space wherein one principle dimension is less than the predefined width of the surface-covering and wherein one principle dimension is greater than the predefined width of the surface-covering and which has no obstruction;
(c) A large simple space wherein both principle dimensions are greater than the predefined width of the surface-covering and which has no obstruction;
(d) A small complex space wherein both principle dimensions are less than the predefined width of the surface-covering and which has one or more obstructions;
(e) A medium complex space wherein one principle dimension is less than the predefined width of the surface-covering and wherein one principle dimension is greater than the predefined width of the surface-covering and which has one or more obstructions; or
(f) A large complex space wherein both principle dimensions are greater than the principle dimensions of the surface-covering and which has one or more middle obstructions.

By analysing the spaces in this way, the pattern data generation step may run more efficiently as a small simple space 50 should not need any analysis to generate pattern data as the shape of the surface-covering should be substantially the same as the space 50. Furthermore the limit criteria which could be identified in step 24 of pattern data generation processes 15,115,215 will be characterised by the analysis of the spaces. For the complex spaces, the potential limit criteria include an obstruction. For the medium and large spaces, the potential limit criteria include the pre-determined width of the surface-covering and an edge of a piece of surface-covering.

The hierarchy of pattern criteria are inputted in step 14 by a user selecting from a number of predetermined pattern criteria which include one or more aesthetic criteria, one or more functional criteria, and/or one or more machine-learnt criteria. The one or more aesthetic criteria may include orientation of surface-covering joints in a space where more than one piece of surface-covering is needed to cover it such as a medium or large space or a complex space, orientation of the surface-covering when it has a directional pattern (such as a wooden plank pattern), and/or position of a joint relative to an obstruction. The one or more functional criteria may include proximity of a joint to a doorway, proximity of a joint near a central feature, complexity, minimising the number of joints and/or pieces of surface covering, and/or minimising the amount of waste. The one or more machine-learnt criteria may be obtained through AI analysis of training sets to identify one or more machine-learnt criteria which characterise the training sets.

The hierarchy of pattern criteria is characterised by assigning a low numerical value to desired criteria such as 0, 1, or 2, a medium numerical value such as 3 or 4 to unimportant criteria, and a high numerical value such as 5, 6, or 7 to undesired criteria such that a low score for scored pattern data would indicate a favourable array suitable for use as a surface plan layout. In an alternative embodiment, the hierarchy of pattern criteria may be characterised by assigning a high numerical value to desired criteria such as 5, 6, or 7, a medium numerical value such as 3 or 4 to unimportant criteria, and a low numerical value such as 0, 1, or 2 to undesired criteria such that a high score for scored pattern data would indicate a favourable array suitable for use as a surface plan layout; if such an approach is adopted, the references herein to low scoring pattern data should be replaced by references to high scoring pattern data.

The sets 70A,70B of pattern data generated in step 15 define pattern characteristics which include the number of pieces of surface-covering, the measurements of each piece, the shape of each piece, laying direction of each piece, laying angle of each piece, number of joints, position of each joint, and/or machine-learnt pattern characteristics.

The pattern data generated in the generating and scoring step 15,115,215 includes input pattern parameters and output pattern parameters. Input pattern parameters are used as input variables in the pattern data generation step 15,115,215. Input pattern parameters include the laying direction of each piece of surface covering, the laying angle of each piece of surface covering, and optionally one or more machine-learnt input pattern parameters. Output pattern parameters are generated as output variables in the pattern data generation step 15,115,215. Output pattern parameters include the number of pieces of surface-covering, the measurements of each piece, the shape of each piece, number of joints, the position of each joint, and optionally one or more machine-learnt output pattern parameters. The pattern data generated in the generating and scoring step 15,115,215 is scored according to the hierarchy of pattern criteria.

The step of analysing 16 the sets of pattern data generated in step 15 of process 10 comprises identifying low scoring pattern data for each space 40,50 using statistical analysis of the scored pattern data such that one or more arrays of low scoring pattern data may be generated.

The cutting plan generation step 17 which involves generating and scoring cutting plans comprises performing a cutting stock analysis of the arrays of pattern data generated in analysis step 16 of process 10 or for each scored array generated in step 115,215 of process 110 in order to generate a cutting plan for each array which identifies what length of surface-covering would be needed to generate the pieces of surface-covering suitable for covering the spaces in the surface plan. Once the length of surface-covering is known, the cutting plan can be scored on its usage efficiency which is calculated as a ratio between the area of the surface plan and the area of the length of surface-covering used in the cutting plan.

Step 18 of analysing the cutting plans in process 10 comprises identifying the most efficient arrays. In an alternative embodiment where efficient use of the surface-covering is not a concern for the user, steps 17 and 18 may be omitted from process 10.

Step 19 comprises identifying low scoring arrays of pattern data and efficient cutting plans in order to identify arrays of pattern data which satisfy the hierarchy of pattern criteria and which are efficient in their use of the surface covering. The array of pattern data which is the best fit for the hierarchy of pattern criteria and is efficient may then be used to generate a kit of pieces of surface-covering for the one or more spaces of the surface plan.

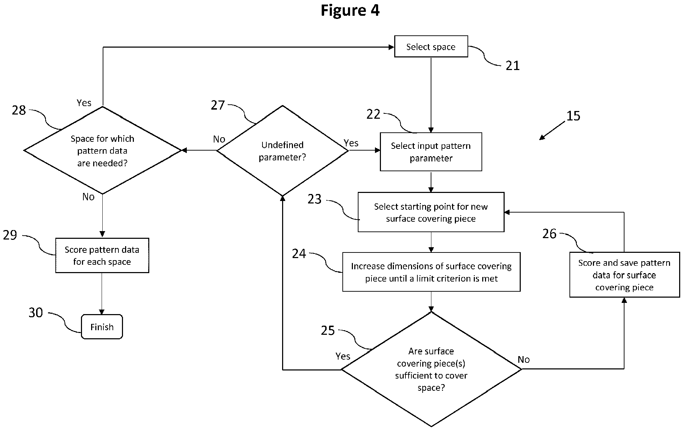

A flowchart illustrating the steps for the first embodiment of the process to be used in the step for generating sets of pattern data is indicated generally at 15 on Figure 4. Flowchart 15 comprises the core sequential steps of selecting 21 a space for which pattern data are to be defined for a set of input parameters, selecting 22 a new input pattern parameter, selecting 23 a starting point for the new surface covering piece, increasing 24 the dimensions of the surface covering piece until a limit criterion is met, and determining 25 whether the surface covering piece(s) are sufficient to cover the selected space. If the answer to determining step 25 is no, the process proceeds to step 26 for saving the pattern data for the surface covering piece, and then back to step 23 for selecting the starting point for a new surface covering piece. If the answer to determining step 25 is yes in that the surface covering piece(s) are sufficient to cover the selected space, the process proceeds to step 27 to determine whether there is an undefined parameter for the selected space where such an undefined parameter is an input pattern parameter or an undefined starting point where an undefined starting point is a starting point which is not symmetrically equivalent to a defined starting point. Determining step 27 may comprise determining whether for each input parameter value, whether there is a different parameter have been defined. If the answer to determining step 27 is yes, the process returns to step 22 to select an input pattern parameter which may be a new input pattern parameter or an input pattern parameter for which all of the potential starting points have not been defined. If the answer to determining step 27 is no, the process proceeds to step 28 to determine if there is a space for which pattern data are needed. If the answer to determining step 28 is no that there are no spaces for which pattern data are needed, the pattern data for each space is scored 29 and then the process 15 is terminated 30. If the answer to determining step 28 is yes that there is a space for which pattern data are needed, process 15 restarts the core sequential steps at step 21 at which a new space is selected.

In an alternate embodiment, step 25 may comprise analysing the remaining space in order to determine whether the remaining space is a small simple space then continuing to step 27 if it is or continuing to step 26 if it is not. In this way, the time for performing the generation process 15 may be shortened as the surface-covering dimensions for a small simple space are generally the dimensions of that space.

Selection step 22 comprises defining the laying direction of the piece of surface covering, the laying angle of the piece of surface covering, and optionally machine-learnt pattern data. The laying direction of the piece of surface covering defines the relationship between the predetermined width of the surface-covering and the space to be covered by the surface covering. The laying angle of the piece of surface covering defines the angle between a principle dimension of the surface-covering and a perimeter wall of the space. Typically, the laying angle is 90° for a rectilinear space as viewing angles tend to be 90° and so this works best for aesthetic purposes.

Selection step 23 comprises defining a starting point from which the surface covering will extend to cover the space. Typically, the starting point will be an edge of a space defined by a perimeter wall 42,46 of the space or an edge of a piece of surface-covering if a piece of surface-covering has already been identified.

Step 24 comprises increasing the dimensions of the new piece of surface covering until a limit criterion is met where a limit criterion includes a perimeter wall, the pre-determined width of the surface-covering to be used in the kit, an edge of a piece of surface covering already identified or an obstruction. In an alternative embodiment, a perimeter feature and/or a central feature may also be treated as a limit criterion where the piece of surface covering is to be shaped around such features. The limit criterion for each space are identified in analysis step 13.

Step 25 comprises comparing the area of the surface covering piece with the area of the space and proceeding to step 26 if the area of the surface covering piece is substantially less than the area of the space or to step 27 if the area of the surface covering piece is substantially the same as the area of the space.

Step 27 of process 15 comprises determining if there is a parameter for the selected space which has not yet been identified. Such an undefined parameter may be an input parameter, a starting point for the selected space or a limit criterion for the selected space. If the answer to the question in step 27 is yes that there is an undefined parameter, the next step in process 15 is to return to input pattern parameter selection step 22. If the answer to the question is no that there is no undefined parameter, the next step in process 15 is to proceed to step 28 where it is determined whether there is a space for which pattern data has not been defined. If the answer to the question in step 28 is yes, the process returns to step 21 where a new space is selected. If the answer to the question in step 28 is no, process 15 proceeds to step 29.

Step 29 comprises assigning a score to the pattern data for each space according to the hierarchy of pattern data inputted in step 14 of process 10. Step 30 represents the end of the pattern generation process 15,115,215 after which the next step is step 16 of process 10 or step 17 of process 115,215.

In an alternative embodiment to the process 15 as illustrated in Figure 3, instead of generating a set of pattern data for each space in turn where the set of pattern data comprises a set of solutions for each space where each solution is characterised by a different input pattern parameter, the pattern data generation process 15 may involve generating arrays of pattern data for each input pattern parameter where the array comprises a solution for each space. Flowcharts illustrating the steps of the second and third embodiments of the pattern data generation process are indicated generally at 115,215 on Figures 5 and 6.

Flowcharts 115,215 comprise the core sequential steps of selecting 121 an input pattern parameter for which pattern data are to be defined for an array of spaces, selecting 122 a new space, selecting 23 a starting point for the new surface covering piece, increasing 24 the dimensions of the surface covering piece until a limit criterion is met, and determining 25 whether the surface covering piece(s) are sufficient to cover the selected space. If the answer to determining step 25 is no, the process proceeds to step 26 for saving the pattern data for the surface covering piece, and then back to step 23 for selecting the starting point for a new surface covering piece.

In flowchart 115, if the answer to determining step 25 is yes in that the surface covering piece(s) are sufficient to cover the selected space, the process proceeds to step 127 to determine whether there is there is a space for which pattern data are needed. If the answer to determining step 127 is yes, the process returns to step 22 to select a new space. If the answer to determining step 127 is no, the process proceeds to step 128 to determine if there is an undefined pattern parameter. If the answer to determining step 128 is no that there are no undefined input pattern parameters, the process 115 proceeds to step 29 where the pattern data for each space is scored 29 and then the process 115 is terminated 30. If the answer to determining step 128 is yes that there is an undefined input pattern parameter, the process 115 restarts the core sequential steps at step 121 at which a input pattern parameter is selected.

In flowchart 215, if the answer to determining step 25 is yes in that the surface covering piece(s) are sufficient to cover the selected space, the process proceeds to step 27 to determine whether there is an undefined parameter for the selected space where such an undefined parameter is an undefined starting point where an undefined starting point is a starting point which is not symmetrically equivalent to a defined starting point. If the answer to determining step 27 is yes, the process returns to step 23 to select a new starting point which has not yet been defined. If the answer to determining step 27 is no, the process proceeds to step 127 to determine whether there is there is a space for which pattern data are needed. If the answer to determining step 127 is yes, the process returns to step 122 to select a new space. If the answer to determining step 127 is no, the process proceeds to step 128 to determine if there is an undefined pattern parameter. If the answer to determining step 128 is no that there are no undefined input pattern parameters, the process 115 proceeds to step 29 where the pattern data for each space is scored 29 and then the process 115 is terminated 30. If the answer to determining step 128 is yes that there is an undefined input pattern parameter, the process 115 restarts the core sequential steps at step 121 at which an input pattern parameter is selected.

Arrays of pattern data for the spaces 40,50 of the surface plan 35 shown in Figure 1 are indicated generally at 60A,60B,60C on Figures 7A, 7B and 7C. Arrays 60A,60B,60C differ in the laying direction of the pieces 63 of surface-covering as the surface-covering has a directional pattern indicated by stripes and the starting point of the pieces of surface covering. In array 60A, the surface-covering is arranged such that its stripes are parallel to perimeter walls 42,52 and the starting point was the shorter perimeter wall 46,56. In arrays 60B,60C, the surface-covering is arranged such that its stripes are parallel to perimeter walls 46,56 and the starting point for the first piece of surface-covering was the longer perimeter wall 42,52. Arrays 60A,60B,60C also represents kits of pieces of surface-covering for

Array 60A comprises pattern data for space 40 which is indicated generally at 61A and pattern data for space 50 which is indicated generally at 68A. Pattern data 61A comprises the dimensions for two pieces 63 of surface-covering which are to be arranged to each side of obstructions 44A,44B, the dimensions for cut-outs 66 for accommodating the obstructions 44A,44B, the dimensions for cut-out 67 to accommodate perimeter feature 45, and the location of joint 65. Pattern data 68A is for a small simple space and so the pattern data for piece 63 is the same as the dimensions of room 50 which are the lengths of perimeter walls 52,56.

The pattern data for array 60A states that array 60A comprises three pieces of surface-covering, the measurements of each piece, the shape of each piece, the laying angle of 90° to perimeter walls 46,56, and one joint which is perpendicular to perimeter wall 42. The process 10,110 may allow for different placings of the joint relative to the obstructions 44A,44B. In Figure 7A, the joints are shown as bisecting obstructions 44A,44B but they may be arranged at any point from one edge of the obstructions 44A,44B to the other.

Array 60B comprises pattern data for space 40 which is indicated generally at 61B and pattern data for space 50 which is indicated generally at 68B. Pattern data 61B comprises the dimensions for three pieces 63 of surface-covering, the dimensions for cut-outs 66 for accommodating the obstructions 44A,44B, the dimensions for cut-out 67 to accommodate perimeter feature 45, and the location of the two joints 65. The three pieces 63 of surface-covering are to be arranged to the left of obstruction 44A with a starting point of the left hand long perimeter wall 42, between obstructions 44A,44B with a starting point of the right hand edge of the first piece 63, and to the right of obstruction 44B with a starting point of the right hand long perimeter wall 42. Pattern data 68B is for a small simple space and so the pattern data for piece 63 is the same as the dimensions of room 50 which are the lengths of perimeter walls 52,56.

The pattern data for array 60B states that array 60B comprises four pieces of surface-covering, the measurements of each piece, the shape of each piece, the laying angle of 90° to perimeter walls 42,52, and two joints which are perpendicular to perimeter wall 46. The process 10,110 may allow for different placings of the joints relative to the obstructions 44A,44B. In Figure 7B, the joints are shown as bisecting obstructions 44A,44B but they may be arranged at any point from one edge of the obstructions 44A,44B to the other.

Array 60C comprises pattern data for space 40 which is indicated generally at 61C and pattern data for space 50 which is indicated generally at 68B. Pattern data 61C comprises the dimensions for three pieces 63 of surface-covering, the dimensions for cut-outs 66 for accommodating the obstructions 44A,44B, the dimensions for cut-out 67 to accommodate perimeter feature 45, and the location of the two joints 65. The three pieces 63 of surface-covering are to be arranged to the left of obstruction 44A with a starting point of the left hand long perimeter wall 42, below upper short perimeter wall 46 and obstruction 44B with a starting point of the upper short perimeter wall 46, and between obstruction 44B and lower short perimeter wall 46 with a starting point of lower short perimeter wall 46. Pattern data 68B is for a small simple space and so the pattern data for piece 63 is the same as the dimensions of room 50 which are the lengths of perimeter walls 52,56.

The pattern data for array 60C states that array 60C comprises four pieces of surface-covering, the measurements of each piece, the shape of each piece, the laying angle of 90° to perimeter walls 42,52, and two joints of which one is perpendicular to perimeter wall 42 and the other is perpendicular to perimeter wall 46. The process 10,110 may allow for different placings of the joints relative to the obstructions 44A,44B. In Figure 7C, the joints are shown as bisecting obstructions 44A,44B but they may be arranged at any point from one edge of the obstructions 44A,44B to the other.

The scoring for array 60A is low compared to arrays 60B,60C because of the use of three pieces of surface-covering and one joint compared to four pieces of surface-covering and two joints for arrays 60B,60C. Also, in arrays 60B,60C, there is a joint which is proximal to doorway 41A. Array 60C has a lower score than array 60B because of the proximity of right hand joint 65 to drain central feature 47 in array 60B.

In an alternative embodiment, if the surface-covering pattern needs to be self-coving, the pattern data would also identify the perimeter edges of each piece 63 which would be adjacent to a perimeter wall such that sufficient shape of the piece 63 could be increased at each perimeter edge such that the piece 63 is suitable for self-coving where part of the piece of surface-covering is arranged to run up each perimeter wall to form a coving. In an alternative embodiment, cut-outs 66,67 may be omitted from the pattern data if the obstructions 44A,44B and perimeter feature 45 are small enough for the surface-covering fitter to cut the surface-covering themselves when laying the surface-covering.

It will be understood that arrays 60A,60B are not all the potential solutions for surface plan 35 as the pattern data for array 60A may have a laying direction which is parallel to short perimeter wall 46,56, and the pattern data for arrays 60B,60C may have a laying direction which is parallel to long perimeter wall 42,52.

Sets of pattern data for spaces 40,50 are indicated generally at 70A,70B on Figures 8A and 8B. Set 70A comprises pattern data 61A,61B,61C as defined above in relation to arrays 60A,60B,60C. Set 70B comprises pattern data 68A,68B as defined above in relation to arrays 60A,60B,60C.

It will be understood that sets 70A,70B do not contain all of the pattern data for surface plan 35 as the pattern data for array 60A may have a laying direction which is parallel to short perimeter wall 46,56, and the pattern data for arrays 60B,60C may have a laying direction which is parallel to long perimeter wall 42,52.

It should also be understood that the surface plan shown in Figure 1, the arrays shown in Figures 7A, 7B, and 7C, and the sets shown in Figures 8A and 8B are relatively simple embodiments provided by way of example to illustrate the invention. It should be appreciated that carrying out the method of the invention to prepare arrays and/or sets for a combination of two or more moderate simple spaces, and/or two or more small complex spaces, and/or one or more moderate complex spaces, and optionally one or more small simple space would be a task of such complexity that it would be necessary to use a software application to carry out the method.

## Claims

1. A method for the preparation of pattern data for a surface-covering for one or more spaces wherein the surface-covering is a continuous surface-covering supplied in a roll having a pre-determined width; wherein the one or more spaces include:
(i) one or more moderate simple spaces wherein at least one principle dimension is greater than the predefined width of the surface-covering and which has no obstruction; and/or
(ii) one or more small complex spaces wherein both principle dimensions are less than the predefined width of the surface-covering and which has one or more obstructions; and/or
(iii) one or more moderate complex spaces wherein at least one principle dimension is greater than the predefined width of the surface-covering and which has one or more obstructions; and optionally
(iv) one or more small simple spaces wherein both principle dimensions are less than the predefined width of the surface-covering and which has no obstruction;
where an obstruction is a central feature which requires a joint in the surface-covering for the surface-covering to be arranged around it; wherein the surface-covering pattern data defines pattern characteristics which include the number of pieces of surface-covering to cover the one or more spaces, the measurements of each piece, the shape of each piece, laying direction of each piece, laying angle of each piece, number of joints, position of each joint, and/or -machine-learnt pattern characteristics which method comprises the steps of:
a. Providing a surface plan for the one or more spaces wherein the surface plan defines shape characteristics of each of the spaces wherein shape characteristics comprise the dimensions and shape of each space and the location, type, shape, and/or dimensions of any space feature in each space;
b. Determining a hierarchy of pattern criteria for determining one or more pattern priorities for the surface-covering pattern wherein the pattern criteria include one or more aesthetic criteria, one or more machine-learnt criteria, and/or minimising the number of joints;
c. Generating pattern data for the one or more spaces wherein the pattern data defines pattern characteristics; and
d. Analysing the pattern data according to the pattern criteria hierarchy to identify pattern data which have the best fit with the pattern criteria.

2. A method as defined in Claim 1 wherein the pattern criteria include increasing efficiency of usage of the surface-covering and the method includes a cutting plan generation step which comprises producing a cutting plan from the pattern data wherein the cutting plan defines how the surface-covering is to be cut to produce a surface-covering kit comprising a plurality of pieces of surface-covering suitable for covering the surface plan.

3. A method as defined in Claim 1 or Claim 2 wherein the cutting plan generation step comprises scoring a cutting plan on its usage efficiency.

4. A method as defined in any one of the preceding Claims wherein the cutting plan generation step is performed after step (c) and wherein step (d) comprises analysing the pattern data and their associated cutting plan according to the pattern criteria; preferably the cutting plan generation step is performed after step (d) on the pattern data and wherein the method comprises a final step of analysing the cutting plans according to their usage efficiency.

5. A method as defined in any one of the preceding Claims wherein the method comprises generating an array of pattern data which defines pattern data for each of the one or more spaces; preferably the generating step (c) or analysing step (d) comprises generating an array of pattern data for the one or more spaces.

6. A method as defined in any one of the preceding Claims wherein the one or more machine learnt criteria and/or machine-learnt pattern characteristics includes one or more criteria and/or characteristics which are learnt through analysis of one or more training sets of data relating to layouts, arrays of surface-covering patterns, and selected surface-covering patterns in order to identify an additional criteria or characteristic which is common to selected surface-covering patterns.

7. A method as defined in any one of the preceding Claims wherein step (c) uses one or more input pattern parameters to generate one or more output pattern parameters for each space wherein the pattern data comprises the input pattern parameters and the output pattern parameters; preferably the one or more input pattern parameters comprises the laying direction of each piece of surface covering, the laying angle of each piece of surface covering, and optionally one or more machine-learnt input pattern parameters; preferably the one or more output pattern parameters include the number of pieces of surface-covering, the measurements of each piece, the shape of each piece, number of joints, the position of each joint, and optionally one or more machine-learnt output pattern parameters.

8. A method as defined in any one of the preceding Claims wherein the surface plan includes a space count, the shape of each space, the principle dimensions of each space, a space feature count, and/or a space feature type wherein a space feature includes one or more of an obstruction which requires a joint in the surface-covering in order to accommodate it, a central feature, and/or a perimeter feature; preferably the space feature type defines dimensions of each space feature; preferably the surface plan defines one or more of the spaces in which coving is required, which boundaries of a space require coving, and/or the height of the coving wherein a coving is to be provided by a self-coving surface-covering where part of the surface-covering covers a lower part of a wall for ease of cleaning and hygiene; preferably the pattern characteristics include a coving characteristic to identify which edges of a piece of surface-covering are shaped for providing coving; preferably the surface plan includes subfloor information for each space which may include subfloor moisture content, subfloor substrate type, and/or subfloor heating type; preferably the pattern characteristics define a surface-covering type or surface-covering adhesive to suit the subfloor.

9. A method as defined in any one of the preceding Claims wherein the surface-covering has a predefined width and wherein the method includes a surface plan analysis step (a1) to be performed after step (a) wherein the surface plan analysis step comprises classifying each of the one or more spaces as being:
a. A small simple space wherein both principle dimensions are less than the predefined width of the surface-covering and which has no obstruction;
b. A moderate simple space wherein at least one principle dimension is greater than the predefined width of the surface-covering and which has no obstruction;
c. A small complex space wherein both principle dimensions are less than the predefined width of the surface-covering and which has one or more obstructions; or
d. A moderate complex space wherein at least one principle dimension is greater than the predefined width of the surface-covering and which has one or more obstructions;
where an obstruction is a central feature which requires a joint in the surface-covering for the surface-covering to be arranged around it.

10. A method as defined in Claim 9 wherein a moderate simple space is:
(i) a medium simple space wherein one principle dimension is greater than the predefined width of the surface-covering and which has no obstruction; or
(ii) a large simple space wherein both principle dimensions are greater than the predefined width of the surface-covering and which has no obstruction; and wherein a moderate complex space is:
(iii) a medium complex space wherein one principle dimension is greater than the predefined width of the surface-covering and which has one or more obstructions; or
(iv) a large complex space wherein both principle dimensions are greater than the predefined width of the surface-covering and which has one or more obstructions.

11. A method as defined in Claim 9 or Claim 10 wherein the generation step (c) comprises generating pattern data which include the laying direction for the surface-covering, the shape of the piece of surface-covering, the dimensions of the piece of surface-covering, the starting point for the piece of surface covering, and optionally a machine-learnt characteristic for a small simple space, and generating pattern characteristics which are the number of pieces of surface-covering, the shape of each piece, laying direction of each piece, the number of joints, the position of each joint, and optionally a machine-learnt pattern characteristic for the other spaces.

12. A method as defined in any one of the preceding Claims wherein the one or more aesthetic criteria include orientation of a joint in relation to the line of sight of a user of a space, consistent positioning of joints in relation to middle obstructions of a similar type, proximity of a joint to a doorway, and/or orientation of the surface-covering where the surface-covering has a directional pattern.

13. A kit comprising one or more pieces of surface-covering defined by pattern data obtained by the method as defined in any one of the preceding Claims.

14. A software application operable to perform a method as defined in any one of Claims 1 to 13.
